(19) Europäisches Patentamt
European Patent Office
Office européen des brevets

(11) EP 4 672 403 A1

(12) **EUROPEAN PATENT APPLICATION**
published in accordance with Art. 153(4) EPC

(43) Date of publication:
**31.12.2025 Bulletin 2026/01**

(21) Application number: **23938876.2**

(22) Date of filing: **31.05.2023**

(51) International Patent Classification (IPC):
***H01M 10/0525*** *(2010.01)*

(52) Cooperative Patent Classification (CPC):
Y02E 60/10

(86) International application number:
**PCT/CN2023/097546**

(87) International publication number:
**WO 2024/243885 (05.12.2024 Gazette 2024/49)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Contemporary Amperex Technology Co., Limited**
**Ningde, Fujian 352100 (CN)**

(72) Inventors:
- **GUO, Yao**
**Ningde, Fujian 352100 (CN)**
- **ZOU, Hailin**
**Ningde, Fujian 352100 (CN)**
- **CHEN, Peipei**
**Ningde, Fujian 352100 (CN)**

(74) Representative: **Lorenz Seidler Gossel Part. mbB**
**Widenmayerstr. 23**
**80538 München (DE)**

(54) **SECONDARY BATTERY AND ELECTRIC DEVICE**

(57) Embodiments of the present application provide a secondary battery and an electric device. The secondary battery comprises a positive electrode sheet, a separator, and a negative electrode sheet; at least one of the positive electrode sheet, the separator, or the negative electrode sheet comprises an ion trapping agent; the reduction potential of the ion trapping agent relative to lithium metal is 0-2 V. The cycle performance of the secondary battery provided by the embodiments of the present application is improved.

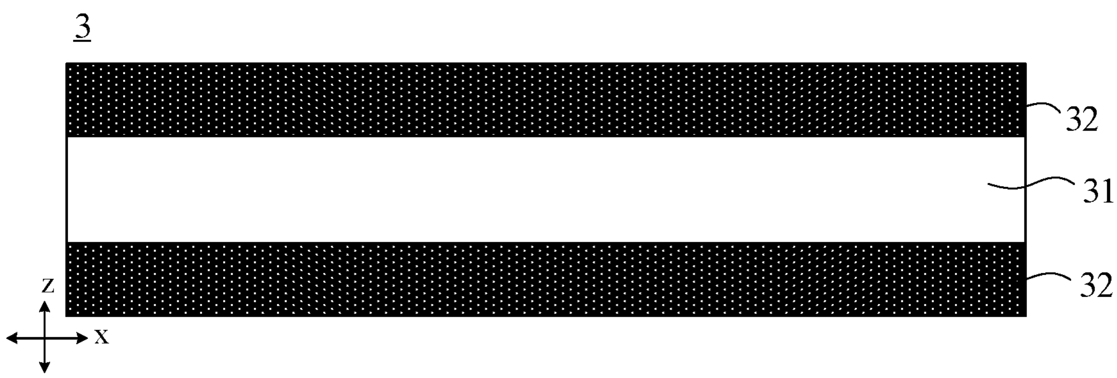


FIG. 3

EP 4 672 403 A1

## Description

### TECHNICAL FIELD

The present application relates to the technical field of batteries, and in particular, to a secondary battery and an electric device.

### BACKGROUND

In recent years, secondary batteries, due to their high energy density and good cycle performance, have been widely used in energy storage power systems such as hydropower, thermal power, wind power, and solar power stations, as well as in various fields such as electric tools, electric bicycles, electric motorcycles, electric vehicles, military equipment, and aerospace. With the great development and wide application of secondary batteries, higher requirements are also put forward on the electrochemical performance and the like of the secondary batteries.

Therefore, how to provide a secondary battery with good performance is a technical problem that needs to be solved urgently.

### SUMMARY

The present application is made in view of the above technical problems and is intended to provide a secondary battery and an electric device. The cycle performance of the secondary battery is improved.

In a first aspect, the present application provides a secondary battery. The secondary battery includes a positive electrode plate, a separator, and a negative electrode plate, where at least one of the positive electrode plate, the separator, or the negative electrode plate includes an ion trapping agent, and the reduction potential of the ion trapping agent relative to lithium metal is 0-2 V.

In the embodiments of the present application, at least one of the positive electrode plate, the separator, or the negative electrode plate of the secondary battery includes the ion trapping agent, and the reduction potential of the ion trapping agent relative to lithium metal is 0-2 V. The positive electrode material is an important part of the secondary battery that directly influences the performance of the secondary battery. However, a transition-metal-containing positive electrode material may inevitably be subjected to the dissolution of transition metal ions in an electrochemical environment. On one hand, the dissolved transition metal ions may destroy the structural stability of the original positive electrode material and thus influence the service life of the secondary battery. On the other hand, the dissolved transition metal ions can migrate and deposit on the surface of the negative electrode material, catalyze the decomposition and regeneration of the electrolytic solution and the negative electrode interface film, continuously consume the reversible active metal, and finally lead to reduced performance of the secondary battery. In the technical solution of the embodiments of the present application, the reduction potential of the ion trapping agent in the secondary battery relative to lithium metal is 0-2 V, while the reduction potential of the transition metal ions relative to lithium metal is generally greater than 2 V. Therefore, the ion trapping agent can reduce transition metal ions dissolved from the secondary battery into low-valence ions that are not easily dissolved, or into elemental metals, thereby improving the situation that transition metal ions catalyze the decomposition of the electrolytic solution and the negative electrode interface film. In addition, since the reduction potential of $H^+$ relative to lithium metal is higher than the reduction potential of the transition metal ions relative to lithium metal, the ion trapping agent can also reduce $H^+$ in the battery cell, i.e., play a role in removing acidic substances (such as HF, organic acid $RH^+$, H· free radicals, etc.) in the electrolytic solution, thereby further improving the performance of the secondary battery. Therefore, the secondary battery provided in the embodiments of the present application possesses improved cycle performance.

In one possible implementation, the ion trapping agent includes at least one of an active metal and an alkali metal compound. Optionally, the active metal includes at least one of Li, Na, K, Rb, Cs, Fr, Mg, Ca, Sr, Ba, Al, Ti, or V, and optionally, the active metal includes at least one of Li, Na, Mg, Al, Ti, or V; optionally, the alkali metal compound includes at least one of $A^1_xB$, $A^2_yTi_5O_{12}$, and a compound represented by formula (I), formula (II), or formula (III):

$R-A^3$ (I), 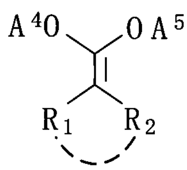 (II), 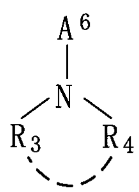 (III)

where $A^1$, $A^2$, $A^3$, $A^4$, $A^5$, and $A^6$ each independently include at least one of Li, Na, or K, B includes C, Si, or Sn, $x \geq 0.05$, y >

4, and R, $R_1$, $R_2$, $R_3$, and $R_4$ each independently include at least one of a hydrogen atom, an alkyl having 1-20 carbon atoms, an alkyl having 1-20 carbon atoms and substituted with a sulfonic acid group or a sulfonyl, an alkenyl having 2-20 carbon atoms, an alkenyl having 2-20 carbon atoms and substituted with a sulfonic acid group or a sulfonyl, an aryl having 6-26 carbon atoms, an aryl having 6-26 carbon atoms and substituted with a sulfonic acid group or a sulfonyl, a carboxyl having 1-20 carbon atoms, a carboxyl having 1-20 carbon atoms and substituted with a sulfonic acid group or a sulfonyl, a carbonyl group having 1-20 carbon atoms, a carbonyl having 1-20 carbon atoms and substituted with a sulfonic acid group or a sulfonyl, an aryloxy having 6-26 carbon atoms, and an aryloxy having 6-26 carbon atoms and substituted with a sulfonic acid group or a sulfonyl.

In one possible implementation, the $A^1_xB$ includes at least one of $Li_{1/6}C$, $Na_{1/6}C$, $K_{1/8}C$, $Li_{4.4}Si$, or $Li_{4.4}Sn$.

In one possible implementation, $5 \le y \le 7$, and the $A^2_yTi_5O_{12}$ includes at least one of $Li_7Ti_5O_{12}$ or $Na_7Ti_5O_{12}$.

In one possible implementation, the compound represented by formula (I) includes at least one of n-butyllithium, lithium naphthalenide, or lithium biphenyl.

In one possible implementation, the compound represented by formula (II) includes at least one of

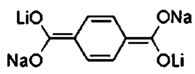 , 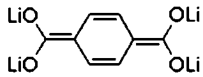 , or 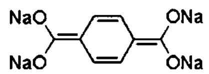 .

In one possible implementation, the compound represented by formula (III) includes at least one of

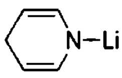 , 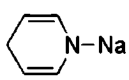 , or 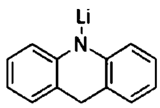 .

In one possible implementation, the positive electrode plate includes a positive electrode current collector and a positive electrode film layer arranged on the positive electrode current collector, and the positive electrode film layer includes the ion trapping agent.

In one possible implementation, the ion trapping agent is present in the positive electrode film layer in a mass percentage of 0.1% to 10%, and optionally, the ion trapping agent is present in the positive electrode film layer in a mass percentage of 1% to 5%.

When the mass percentage of the ion trapping agent in the positive electrode film layer is in the given range, the ion trapping agent works well in reducing transition metal ions, thus further improving the cycle performance of the battery.

In one possible implementation, the negative electrode plate includes a negative electrode current collector and a negative electrode film layer arranged on the negative electrode current collector, and the negative electrode film layer includes the ion trapping agent.

In one possible implementation, the ion trapping agent is present in the negative electrode film layer in a mass percentage of 0.1% to 10%, and optionally, the ion trapping agent is present in the negative electrode film layer in a mass percentage of 1% to 5%.

When the mass percentage of the ion trapping agent in the negative electrode film layer is in the given range, the ion trapping agent works well in reducing transition metal ions, thus further improving the cycle performance of the battery.

In one possible implementation, the separator includes a porous base film, and the porous base film includes the ion trapping agent.

In one possible implementation, the ion trapping agent is present in the porous base film in a mass percentage of 1% to 20%, and optionally, the ion trapping agent is present in the porous base film in a mass percentage of 5% to 10%.

When the mass percentage of the ion trapping agent in the porous base film is in the given range, the ion trapping agent works well in reducing transition metal ions, thus further improving the cycle performance of the battery.

In one possible implementation, the separator includes the porous base film and a porous coating arranged on the porous base film, and the porous coating includes the ion trapping agent.

In one possible implementation, the ion trapping agent is present in the porous coating in a mass percentage of 8% to 50%, and optionally, the ion trapping agent is present in the porous coating in a mass percentage of 10% to 20%.

When the mass percentage of the ion trapping agent in the porous coating is in the given range, the ion trapping agent works well in reducing transition metal ions, thus further improving the cycle performance of the battery.

In a second aspect, the present application provides an electric device. The electric device includes the secondary battery according to the first aspect or any one of the possible implementations thereof.

The embodiments of the present application provide a secondary battery. At least one of the positive electrode plate, the separator, or the negative electrode plate of the secondary battery includes an ion trapping agent, and the reduction potential of the ion trapping agent relative to lithium metal is 0-2 V. The positive electrode material is an important

part of the secondary battery that directly influences the performance of the secondary battery. However, a transition-metal-containing positive electrode material may inevitably be subjected to the dissolution of transition metal ions in an electrochemical environment. On one hand, the dissolved transition metal ions may destroy the structural stability of the original positive electrode material and thus influence the service life of the secondary battery. On the other hand, the dissolved transition metal ions can migrate and deposit on the surface of the negative electrode material, catalyze the decomposition and regeneration of the electrolytic solution and the negative electrode interface film, continuously consume the reversible active metal, and finally lead to reduced performance of the secondary battery. In the technical solution of the embodiments of the present application, the reduction potential of the ion trapping agent in the secondary battery relative to lithium metal is 0-2 V, while the reduction potential of the transition metal ions relative to lithium metal is generally greater than 2 V. Therefore, the ion trapping agent can reduce transition metal ions dissolved from the secondary battery into low-valence ions that are not easily dissolved, or into elemental metals, thereby improving the situation that transition metal ions catalyze the decomposition of the electrolytic solution and the negative electrode interface film. In addition, since the reduction potential of $H^+$ relative to lithium metal is higher than the reduction potential of the transition metal ions relative to lithium metal, the ion trapping agent can also reduce $H^+$ in the battery cell, i.e., play a role in removing acidic substances (such as HF, organic acid $RH^+$, H· free radicals, etc.) in the electrolytic solution, thereby further improving the performance of the secondary battery. Therefore, the secondary battery provided in the embodiments of the present application possesses improved cycle performance.

## BRIEF DESCRIPTION OF THE DRAWINGS

To more clearly illustrate the technical solutions in the embodiments of the present application, the drawings required for illustrating the embodiments of the present application are briefly described below. Apparently, the drawings in the following description illustrate merely some embodiments of the present application, and those of ordinary skills in the art may still derive other drawings from these drawings without creative efforts.

FIG. 1 is a schematic view of a positive electrode plate according to one embodiment of the present application;

FIG. 2 is a schematic view of a negative electrode plate according to one embodiment of the present application;

FIG. 3 is a schematic view of a separator according to one embodiment of the present application;

FIG. 4 is a schematic view of a battery cell according to one embodiment of the present application;

FIG. 5 is an exploded view of a battery cell according to one embodiment of the present application;

FIG. 6 is an exploded view of a secondary battery according to one embodiment of the present application; and

FIG. 7 is a schematic view of an electric device according to one embodiment of the present application.

The accompanying drawings are not drawn to scale.

## DETAILED DESCRIPTION

Hereinafter, embodiments of the battery cell, the battery, and the electric device of the present application are specifically disclosed in detail with appropriate reference to the drawings. However, unnecessarily detailed descriptions may be omitted. For example, detailed descriptions of well-known matters and repetitive descriptions of actually identical structures may be omitted. This is to avoid unnecessary lengthiness of the following descriptions and to facilitate understanding by those skilled in the art. Additionally, the drawings and the following descriptions are provided to enable those skilled in the art to fully understand the present application and are not intended to limit the subject matter recited in the claims.

In the description of the present application, it should be noted that, unless otherwise specified, "a plurality" means two or more; the orientations or positional relationships indicated by the terms "upper", "lower", "left", "right", "inner", "outer", and the like are merely for the convenience of describing the present application and simplifying the description, rather than indicating or implying that the apparatus or element referred to must have a specific orientation or be configured and operated in the specific orientation, and thus shall not be construed as limitations to the present application. Furthermore, the terms "first", "second", "third", and the like are used for descriptive purposes only and shall not be construed as indicating or implying relative importance.

The "ranges" disclosed in the present application are defined with lower and upper limits. A given range is defined

by selecting a lower limit and an upper limit that delineate the boundaries of a particular range. Ranges defined in this manner may include or exclude the end points and can be combined arbitrarily, which means that any lower limit may be combined with any upper limit to form a range. For example, if ranges of 60-120 and 80-110 are listed for a particular parameter, it will be appreciated that ranges of 60-110 and 80-120 are also anticipated. Additionally, if the minimum range values listed are 1 and 2, and the maximum range values listed are 3, 4, and 5, then the following ranges can all be anticipated: 1-3, 1-4, 1-5, 2-3, 2-4, and 2-5. In the present application, unless otherwise specified, the numerical range "a-b" indicates an abbreviated representation of any combination of real numbers between a and b, where both a and b are real numbers. For example, the numerical range "0-5" indicates that all real numbers between "0-5" are listed herein, and "0-5" is merely an abbreviated representation of the combination of these numerical values. Additionally, when stating that a parameter is an integer $\geq 2$, it is equivalent to disclosing that the parameter is, for example, an integer of 2, 3, 4, 5, 6, 7, 8, 9, 10, 11, 12, or the like.

Unless otherwise specified, all steps of the present application can be performed sequentially or randomly, preferably sequentially. For example, if the method includes steps (a) and (b), it indicates that the method may include steps (a) and (b) performed sequentially or steps (b) and (a) performed sequentially. For example, if the mentioned method may further include step (c), it indicates that step (c) may be added to the method in any order; for example, the method may include steps (a), (b) and (c), or steps (a), (c) and (b), or steps (c), (a) and (b), or the like.

Unless otherwise specified, the "include" and "comprise" mentioned in the present application are open-ended. For example, the "include" and "comprise" may mean that other unlisted components may be included or comprised.

Unless otherwise specified, the term "and/or" in the present application is inclusive. For example, the phrase "A and/or B" means "A, B, or both A and B". More specifically, any one of the following conditions satisfies the condition "A and/or B": A is true (or present) and B is false (or absent); A is false (or absent) and B is true (or present); or both A and B are true (or present).

Unless otherwise specified, all embodiments and optional embodiments of the present application can be combined with one another to form new technical solutions.

Unless otherwise specified, all technical features and optional technical features of the present application can be combined with one another to form new technical solutions.

Unless otherwise specified, the following terms have the following meanings. Any undefined terms have recognized meanings in the art.

The "alkyl" refers to a monovalent saturated hydrocarbon group with one or more carbon atoms, optionally 1-20 carbon atoms. For example, the alkyl includes linear hydrocarbon groups and branched hydrocarbon groups, such as methyl ($CH_3$-), ethyl ($CH_3CH_2$-), n-propyl ($CH_3CH_2CH_2$-), isopropyl ($(CH_3)_2CH$-), n-butyl ($CH_3CH_2CH_2CH_2$-), isobutyl ($(CH_3)_2CHCH_2$-), sec-butyl ($(CH_3)(CH_3CH_2)CH$-), tert-butyl ($(CH_3)_3C$-), n-pentyl ($CH_3CH_2CH_2CH_2CH_2$-), neopentyl ($(CH_3)_3CCH_2$-), and the like.

The "alkenyl" refers to a straight or branched hydrocarbon group with one or more carbon atoms, optionally 2-20 carbon atoms, and at least one double bond as an unsaturated site. For example, vinyl ($CH_2$=CH-), propenyl ($CH_3CH$=CH-), allyl ($CH_2$=CH-$CH_2$-), n-butenyl (-$CH_3CH_2CH$=CH-), and the like.

The "aryl" refers to an aromatic compound with a single ring or multiple condensed rings and optionally, 6-26 carbon atoms. For example, the aryl includes phenyl, naphthyl, indenyl, and the like. The aryl also includes a single rings fused to an aryl group, for example, tetrahydronaphthyl, 2,3-dihydroindenyl, and the like.

The "carboxyl" refers to a group with one or more carbon atoms, optionally 1-20 carbon atoms, and a -$CO_2H$ functional group.

The "carbonyl" refers to a group with one or more carbon atoms, optionally 1-20 carbon atoms, and a -CO-functional group.

The "aryloxy" refers to a group formed by the connection of at least one carbon atom to an oxygen atom on an aromatic ring of an aryl group having, optionally, 6-26 carbon atoms.

The "sulfonic acid group" refers to -$SO_3H$.

The "sulfonyl" refers to R-S(=O)$_2$-, where R includes a hydrogen atom, an alkyl, an alkenyl, an alkynyl, an aryl, a cycloalkyl, a cycloalkenyl, a heteroaryl, a heterocyclic group, and the like.

Secondary batteries, due to their high energy density and good cycle performance, have been widely used in energy storage power systems such as hydropower, thermal power, wind power, and solar power stations, as well as in various fields such as electric tools, electric bicycles, electric motorcycles, electric vehicles, military equipment, and aerospace. With the great development and wide application of secondary batteries, higher requirements are also put forward on the performances of the secondary batteries, such as energy density, cycle performance, and discharge capacity.

The positive electrode material is one of the key materials determining the performance of secondary batteries, and mainly includes metal oxides, polyanion salts, and the like, where the transition-metal-containing layered metal oxides and the spinel-type metal oxides are widely used as the positive electrode material. The above transition-metal-containing positive electrode material has the advantages of high energy density, good cycle performance, and the like, and is

beneficial to improving the performance of battery cells. However, the transition-metal-containing positive electrode material may inevitably be subjected to the dissolution of transition metal ions in an electrochemical environment. On one hand, the dissolved transition metal ions may destroy the structural stability of the original positive electrode material and thus influence the service life of the battery. On the other hand, the dissolved transition metal ions can migrate and deposit on the surface of the negative electrode material, catalyze the decomposition and regeneration of the electrolytic solution and the negative electrode interface film, continuously consume the reversible active metal, and finally lead to reduced performance of the battery cells, thereby affecting the performance of the secondary battery.

In view of this, the embodiments of the present application provide a secondary battery. At least one of the positive electrode plate, the separator, or the negative electrode plate of the secondary battery includes an ion trapping agent, and the reduction potential of the ion trapping agent relative to lithium metal is 0-2 V, while the reduction potential of transition metal ions relative to lithium metal is generally greater than 2 V. Therefore, the ion trapping agent can reduce transition metal ions dissolved from the battery cells into low-valence ions that are not easily dissolved, or into elemental metals, thereby improving the situation that transition metal ions catalyze the decomposition of the electrolytic solution and the negative electrode interface film. In addition, since the reduction potential of $H^+$ relative to lithium metal is higher than the reduction potential of the transition metal ions relative to lithium metal, the ion trapping agent can also reduce $H^+$ in the battery cell, i.e., play a role in removing acidic substances (such as HF, organic acid $RH^+$, H· free radicals, etc.) in the electrolytic solution, thereby further improving the performance of the secondary battery. Therefore, the secondary battery provided in the embodiments of the present application possesses improved cycle performance.

Hereinafter, embodiments of the present application are described in detail.

The embodiments of the present application provide a secondary battery including a positive electrode plate, a separator, and a negative electrode plate; at least one of the positive electrode plate, the separator, or the negative electrode plate includes an ion trapping agent, and the reduction potential of the ion trapping agent relative to lithium metal is 0-2 V.

The ion trapping agent as used herein refers to a substance capable of consuming free transition metal ions in the secondary battery. The reduction potential of the ion trapping agent relative to lithium metal is 0-2 V, while the reduction potential of the transition metal ions relative to lithium metal is generally above 2 V. Therefore, the reducibility of the ion trapping agent is stronger than the reducibility of the transition metal ions, and the ion trapping agent can reduce the free transition metal ions into low-valence ions that are not easily dissolved from the positive electrode material, or into elemental metals.

The positive electrode material is an important part of the secondary battery that directly influences the performance of the secondary battery. However, a transition-metal-containing positive electrode material may inevitably be subjected to the dissolution of transition metal ions in an electrochemical environment. On one hand, the dissolved transition metal ions may destroy the structural stability of the original positive electrode material and thus influence the service life of the battery cells. On the other hand, the dissolved transition metal ions can migrate and deposit on the surface of the negative electrode material, catalyze the decomposition and regeneration of the electrolytic solution and the negative electrode interface film, continuously consume the reversible active metal, and finally lead to reduced performance of the secondary battery.

For example, the positive electrode material may include a phosphate material with an olivine structure, a material with a spinel structure, and a layered transition metal oxide. Specifically, for example, lithium iron phosphate ($LiFePO_4$), lithium iron manganese phosphate ($LiMnFePO_4$), lithium manganate ($LiMn_2O_4$), a ternary material, and the like. In the above positive electrode material, the dissolution of iron ions, nickel ions, manganese ions, and the like may be observed.

At least one of the positive electrode plate, the separator, or the negative electrode plate of the secondary battery provided by the embodiments of the present application includes an ion trapping agent, and the reduction potential of the ion trapping agent relative to lithium metal is 0-2 V, while the reduction potential of transition metal ions relative to lithium metal is generally greater than 2 V. Therefore, the ion trapping agent can reduce transition metal ions dissolved from the secondary battery into low-valence ions that are not easily dissolved, or into elemental metals, thereby improving the situation that transition metal ions catalyze the decomposition of the electrolytic solution and the negative electrode interface film. In addition, since the reduction potential of $H^+$ relative to lithium metal is higher than the reduction potential of the transition metal ions relative to lithium metal, the ion trapping agent can also reduce $H^+$ in the secondary battery, i.e., play a role in removing acidic substances (such as HF, organic acid $RH^+$, H· free radicals, etc.) in the electrolytic solution, thereby further improving the performance of the secondary battery. Therefore, the secondary battery provided in the embodiments of the present application possesses improved cycle performance.

It will be appreciated that in the embodiments of the present application, different types of ion trapping agents can be selected according to different types of free transition metal ions dissolved from the battery cell.

Optionally, in some embodiments, the ion trapping agent includes at least one of an active metal and an alkali metal compound.

Specifically, the active metal may include at least one of Li, Na, K, Rb, Cs, Fr, Mg, Ca, Sr, Ba, Al, Ti, or V, and

optionally, the active metal includes at least one of Li, Na, Mg, Al, Ti, or V.

Optionally, the alkali metal compound includes at least one of $A^1_xB$, $A^2_yTi_5O_{12}$, and a compound represented by formula (I), formula (II), or formula (III):

$R-A^3$ (I), 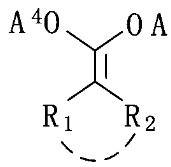 (II), 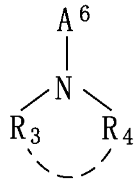 (III)

where $A^1$, $A^2$, $A^3$, $A^4$, $A^5$, and $A^6$ each independently include at least one of Li, Na, or K, B includes C, Si, or Sn, $x \geq 0.05$, $y > 4$, and R, $R_1$, $R_2$, $R_3$, and $R_4$ each independently include at least one of a hydrogen atom, an alkyl having 1-20 carbon atoms, an alkyl having 1-20 carbon atoms and substituted with a sulfonic acid group or a sulfonyl, an alkenyl having 2-20 carbon atoms, an alkenyl having 2-20 carbon atoms and substituted with a sulfonic acid group or a sulfonyl, an aryl having 6-26 carbon atoms, an aryl having 6-26 carbon atoms and substituted with a sulfonic acid group or a sulfonyl, a carboxyl having 1-20 carbon atoms, a carboxyl having 1-20 carbon atoms and substituted with a sulfonic acid group or a sulfonyl, a carbonyl group having 1-20 carbon atoms, a carbonyl having 1-20 carbon atoms and substituted with a sulfonic acid group or a sulfonyl, an aryloxy having 6-26 carbon atoms, and an aryloxy having 6-26 carbon atoms and substituted with a sulfonic acid group or a sulfonyl.

In the embodiments of the present application, the dotted line in formula (II) indicates that $R_1$ and $R_2$ may or may not be connected to form a ring; the dotted line in formula (III) indicates that $R_3$ and $R_4$ may or may not be connected to form a ring.

Optionally, $A^1_xB$ includes at least one of $LiC_6$, $NaC_6$, $KC_8$, $Li_{4.4}Si$, $Li_{4.4}Sn$, or $Li_{22}Si_5$.

In the embodiments of the present application, the value of x in $A^1_xB$ is related to the selected specific substance of B. For example, when B is carbon (C), the upper limit of the value of x is 1/6; for another example, when B is silicon (Si) or tin (Sn), the upper limit of the value of x is 4.4.

Optionally, $5 \leq y \leq 7$, and the $A^2_yTi_5O_{12}$ includes at least one of $Li_7Ti_5O_{12}$ or $Na_7Ti_5O_{12}$.

Optionally, the compound represented by formula (I) includes at least one of n-butyllithium, lithium naphthalenide, or lithium biphenyl.

Optionally, the compound represented by formula (II) includes at least one of

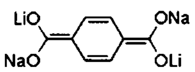 , 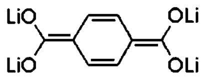 , or 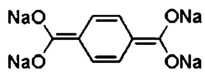 .

Optionally, the compound represented by formula (III) includes at least one of

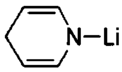 , 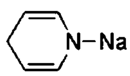 , or 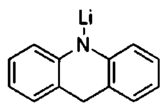 .

Optionally, in some embodiments, as shown in FIG. 1, the positive electrode plate 1 includes a positive electrode current collector 11 and a positive electrode film layer 12 arranged on the positive electrode current collector, and the positive electrode film layer 12 includes the ion trapping agent.

The positive electrode current collector 11 is provided with two surfaces arranged in the thickness direction thereof. Optionally, as shown in FIG. 1, the positive electrode film layer 12 is provided on both surfaces of the positive electrode current collector 11, and the positive electrode current collector 11 and the positive electrode film layers 12 are sequentially arranged in the thickness direction (for example, the z direction in FIG. 1) of the positive electrode plate 1.

Optionally, in some other embodiments, the positive electrode film layer 12 is provided on one of the two opposite surfaces of the positive electrode current collector 11 in the thickness direction.

Optionally, in some embodiments, the ion trapping agent is present in the positive electrode film layer 12 in a mass percentage of 0.1% to 10%, and optionally, the ion trapping agent is present in the positive electrode film layer 12 in a mass percentage of 1% to 5%.

Specifically, the ion trapping agent may be present in the positive electrode film layer 12 in a mass percentage of 0.1%, 1%, 3%, 5%, 7%, 10%, or a value between any two of the above values.

When the mass percentage of the ion trapping agent in the positive electrode film layer is in the given range, the

ion trapping agent works well in reducing transition metal ions, thus further improving the cycle performance of the battery.

Optionally, in some embodiments, as shown in FIG. 2, the negative electrode plate 2 includes a negative electrode current collector 21 and a negative electrode film layer 22 arranged on the negative electrode current collector, and the negative electrode film layer 22 includes the ion trapping agent.

The negative electrode current collector 21 is provided with two surfaces arranged in the thickness direction thereof. Optionally, as shown in FIG. 2, the negative electrode film layer 22 is provided on both surfaces of the negative electrode current collector 21, and the negative electrode current collector 21 and the negative electrode film layers 22 are sequentially arranged in the thickness direction (for example, the z direction in FIG. 2) of the negative electrode plate 2.

Optionally, in some other embodiments, the negative electrode film layer 22 is provided on one of the two opposite surfaces of the negative electrode current collector 21 in the thickness direction.

Optionally, in some embodiments, the ion trapping agent is present in the negative electrode film layer 22 in a mass percentage of 0.1% to 10%, and optionally, the ion trapping agent is present in the negative electrode film layer 22 in a mass percentage of 1% to 5%.

Specifically, the ion trapping agent may be present in the negative electrode film layer 22 in a mass percentage of 0.1%, 1%, 3%, 5%, 7%, 10%, or a value between any two of the above values.

When the mass percentage of the ion trapping agent in the negative electrode film layer is in the given range, the ion trapping agent works well in reducing transition metal ions, thus further improving the cycle performance of the battery.

Optionally, in some embodiments, the separator includes a porous base film, and the porous base film includes the ion trapping agent.

Optionally, in some embodiments, the ion trapping agent is present in the porous base film in a mass percentage of 1% to 20%, and optionally, the ion trapping agent is present in the porous base film in a mass percentage of 5% to 10%.

Specifically, the ion trapping agent may be present in the porous base film in a mass percentage of 1%, 5%, 10%, 15%, 20%, or a value between any two of the above values.

When the mass percentage of the ion trapping agent in the porous base film is in the given range, the ion trapping agent works well in reducing transition metal ions, thus further improving the cycle performance of the battery.

Optionally, in some embodiments, as shown in FIG. 3, the separator 3 includes the porous base film 31 and a porous coating 32 arranged on the porous base film 31, and the porous coating 32 includes the ion trapping agent.

Optionally, the porous base film 31 is provided with two surfaces arranged in the thickness direction thereof. Optionally, as shown in FIG. 3, the porous coating 32 is provided on both surfaces of the porous base film 31, and the porous base film 31 and the porous coatings 32 are sequentially arranged in the thickness direction (for example, the z direction in FIG. 3) of the separator 3.

Optionally, in some other embodiments, the porous coating 32 is provided on one of the two opposite surfaces of the porous base film 31 in the thickness direction.

Optionally, in some embodiments, the ion trapping agent is present in the porous coating 32 in a mass percentage of 8% to 50%, and optionally, the ion trapping agent is present in the porous coating 32 in a mass percentage of 10% to 20%.

Specifically, the ion trapping agent may be present in the porous coating 32 in a mass percentage of 8%, 10%, 15%, 20%, 30%, 40%, 50%, or a value between any two of the above values.

When the mass percentage of the ion trapping agent in the porous coating is in the given range, the ion trapping agent works well in reducing transition metal ions, thus further improving the cycle performance of the battery.

Hereinafter, the positive electrode plate, the negative electrode plate, the electrolytic solution, and the separator in a secondary battery are described specifically.

[Positive Electrode Plate]

The positive electrode plate includes a positive electrode current collector and a positive electrode film layer arranged on at least one surface of the positive electrode current collector, and the positive electrode film layer includes a positive electrode active material.

As an example, the positive electrode current collector is provided with two surfaces opposite to each other in its own thickness direction, and the positive electrode film layer is arranged on any one or both of the two opposite surfaces of the positive electrode current collector.

Optionally, in some embodiments, the positive electrode plate may include the above ion trapping agent. For example, the ion trapping agent may be included in the positive electrode film layer of the positive electrode plate.

In some embodiments, a metal foil or a composite current collector may be used as the positive electrode current collector. For example, as the metal foil, an aluminum foil may be used. The composite current collector may include a polymer material substrate and a metal layer formed on at least one surface of the polymer material substrate. The composite current collector can be formed by forming a metal material (aluminum, aluminum alloy, nickel, nickel alloy, titanium, titanium alloy, silver, silver alloy, etc.) on a polymer material substrate (such as polypropylene (PP), polyethylene

terephthalate (PET), polybutylene terephthalate (PBT), polystyrene (PS), and polyethylene (PE)).

In some embodiments, a positive electrode active material for use in lithium-ion batteries known in the art may be used as the positive electrode active material. As an example, the positive electrode active material may include at least one of the following materials: a lithium-containing phosphate with an olivine structure, a lithium transition metal oxide, and respective modified compounds thereof. However, the present application is not limited to these materials, and other conventional materials that can be used as positive electrode active materials for lithium-ion batteries may also be used. These positive electrode active materials may be used alone or in combination of two or more. Examples of the lithium transition metal oxide may include, but are not limited to, at least one of a lithium cobalt oxide (such as $LiCoO_2$), a lithium nickel oxide (such as $LiNiO_2$), a lithium manganese oxide (such as $LiMnO_2$ or $LiMn_2O_4$), a lithium nickel cobalt oxide, a lithium manganese cobalt oxide, a lithium nickel manganese oxide, a lithium nickel cobalt manganese oxide (such as $LiNi_{1/3}Co_{1/3}Mn_{1/3}O_2$ (also known as NCM333), $LiNi_{0.5}Co_{0.2}Mn_{0.3}O_2$ (also known as NCM523), $LiNi_{0.5}Co_{0.25}Mn_{0.25}O_2$ (also known as NCM211), $LiNi_{0.6}Co_{0.2}Mn_{0.2}O_2$ (also known as NCM622), $LiNi_{0.8}Co_{0.1}Mn_{0.1}O_2$ (also known as NCM811)), a lithium nickel cobalt aluminum oxide (such as $LiNi_{0.85}Co_{0.15}Al_{0.05}O_2$), and modified compounds thereof. Examples of the lithium-containing phosphate with an olivine structure may include, but are not limited to, at least one of lithium iron phosphate (such as $LiFePO_4$ (also known as LFP)), a composite material of lithium iron phosphate and carbon, lithium manganese phosphate (such as $LiMnPO_4$), a composite material of lithium manganese phosphate and carbon, lithium iron manganese phosphate, and a composite material of lithium iron manganese phosphate and carbon.

In some embodiments, the positive electrode film layer further optionally includes a binder. As an example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorinated acrylic resin.

In some embodiments, the positive electrode film layer further optionally includes a conductive agent. As an example, the conductive agent may include at least one of superconducting carbon, acetylene black, carbon black, Ketjen black, a carbon dot, a carbon nanotube, a graphene, and a carbon nanofiber.

In some embodiments, the positive electrode plate can be prepared in the following manner: dispersing the components described above for preparing the positive electrode plate, such as the positive electrode active material, the ion trapping agent of the present application, the conductive agent, the binder, and any other components, in a solvent (such as N-methylpyrrolidone) to form a positive electrode slurry; and coating the positive electrode current collector with the positive electrode slurry, and performing drying, cold pressing, and other processes, such that the positive electrode plate can be obtained.

[Negative Electrode Plate]

The negative electrode plate includes a negative electrode current collector and a negative electrode film layer arranged on at least one surface of the negative electrode current collector, and the negative electrode film layer includes a negative electrode active material.

As an example, the negative electrode current collector is provided with two surfaces opposite to each other in its own thickness direction, and the negative electrode film layer is arranged on any one or both of the two opposite surfaces of the negative electrode current collector.

Optionally, in some embodiments, the negative electrode plate may include the above ion trapping agent. For example, the ion trapping agent may be included in the negative electrode film layer of the negative electrode plate.

In some embodiments, a metal foil or a composite current collector may be used as the negative electrode current collector. For example, as the metal foil, a copper foil may be used. The composite current collector may include a polymer material substrate and a metal layer formed on at least one surface of the polymer material substrate. The composite current collector can be fabricated by forming a metal material (copper, copper alloy, nickel, nickel alloy, titanium, titanium alloy, silver, silver alloy, etc.) on a polymer material substrate (such as polypropylene (PP), polyethylene terephthalate (PET), polybutylene terephthalate (PBT), polystyrene (PS), and polyethylene (PE)).

In some embodiments, a negative electrode active material for use in batteries known in the art may be used as the negative electrode active material. As an example, the negative electrode active material may include at least one of the following materials: artificial graphite, natural graphite, soft carbon, hard carbon, a silicon-based material, a tin-based material, lithium titanate, and the like. The silicon-based material may include at least one of elemental silicon, a silicon-oxygen compound, a silicon-carbon composite, a silicon-nitrogen composite, and a silicon alloy. The tin-based material may include at least one of elemental tin, a tin-oxygen compound, and a tin alloy. However, the present application is not limited to these materials, and other conventional materials that can be used as negative electrode active materials for batteries may also be used. These negative electrode active materials may be used alone or in combination of two or more.

In some embodiments, the negative electrode film layer further optionally includes a binder. The binder may include at least one of styrene-butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan

(CMCS).

In some embodiments, the negative electrode film layer further optionally includes a conductive agent. The conductive agent may include at least one of superconducting carbon, acetylene black, carbon black, Ketjen black, a carbon dot, a carbon nanotube, graphene, and a carbon nanofiber.

In some embodiments, the negative electrode film layer further optionally includes other auxiliary agents, such as a thickener (e.g., sodium carboxymethylcellulose (CMC-Na)).

In some embodiments, the negative electrode plate can be prepared in the following manner: dispersing the components described above for preparing the negative electrode plate, such as the negative electrode active material, the ion trapping agent of the present application, the conductive agent, the binder, and any other components, in a solvent (such as deionized water) to form a negative electrode slurry; and coating the negative electrode current collector with the negative electrode slurry, and performing drying, cold pressing, and other processes, such that the negative electrode plate can be obtained.

[Electrolytic Solution]

The electrolytic solution conducts ions between the positive electrode plate and the negative electrode plate. The present application has no specific restrictions on the type of the electrolyte, which can be selected according to needs.

In some embodiments, the electrolytic solution may include at least one of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoro(oxalato)borate, lithium bis(oxalato)borate, lithium difluorobis(oxalato)phosphate, and lithium tetrafluoro(oxalato)phosphate.

In some embodiments, the solvent of the electrolytic solution may include at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, ethyl methyl sulfone, and diethyl sulfone.

In some embodiments, the electrolytic solution further optionally includes an additive. The additive may include a negative electrode film-forming additive and a positive electrode film-forming additive, and may further include an additive capable of improving certain properties of the battery, such as an additive for improving the overcharge performance of the battery, and an additive for improving the high- or low-temperature performance of the battery.

[Separator]

In some embodiments, a battery cell further includes a separator. The present application does not particularly limit the type of the separator, and any porous-structure separator known to have good chemical stability and mechanical stability may be selected and used.

Optionally, in some embodiments, the separator may include the above ion trapping agent. For example, the ion trapping agent may be included in the porous base film of the separator, and for another example, the separator may include the porous base film and a porous coating, and the ion trapping agent may be contained in the porous coating.

In some embodiments, the separator may be made of a material including at least one of glass fiber, non-woven fabric, polyethylene, polypropylene, and polyvinylidene difluoride. The separator may be a single-layer film or a multi-layer composite film, and there is no particular limitation on this. When the separator is a multi-layer composite film, the materials of the layers may be the same or different, and there is no particular limitation on this.

In some embodiments, the positive electrode plate, the negative electrode plate, and the separator may be manufactured into an electrode assembly through a winding process or a stacking process.

In some embodiments, the battery cell may include an outer packaging. The outer packaging can be used for packaging the electrode assembly and the electrolytic solution described above.

In some embodiments, the outer packaging of the battery cell may be a hard shell, such as a hard plastic shell, an aluminum shell, or a steel shell. The outer packaging of the battery cell may also be a soft pack, such as a pouch-type soft pack. The soft pack may be made of plastic, and examples of the plastic may include polypropylene, polybutylene terephthalate, polybutylene succinate, and the like.

The present application does not particularly limit the shape of the battery cell, and it may have a cylindrical shape, a prismatic shape, or any other shape. For example, FIG. 4 illustrates a battery cell 40 having a prismatic structure as one example.

In some embodiments, referring to FIG. 5, the outer packaging may include a housing 41 and a cover plate 43. The housing 41 may include a bottom plate and a side plate connected to the bottom plate, and the bottom plate and the side plate define, in an enclosing manner, an accommodating cavity. The housing 41 is provided with an opening in communication with the accommodating cavity, and the cover plate 43 is capable of lidding the opening to close the

accommodating cavity. The positive electrode plate, the negative electrode plate, and the separator may be subjected to a winding process or a stacking process to form an electrode assembly 42. The electrode assembly 42 is packaged in the accommodating cavity. The electrolytic solution is infiltrated into the electrode assembly 42. The number of the electrode assembly 42 included in the battery cell 40 may be one or more, and those skilled in the art can select the number according to specific and actual needs.

In some embodiments, a secondary battery 50 may include a plurality of battery cells 40. For example, as shown in FIG. 6, a schematic view of the secondary battery 50 according to one embodiment of the present application, the secondary battery 50 may include a plurality of battery cells 40. The secondary battery 50 may further include a case 51, the interior of the case 51 is a hollow structure, and the plurality of battery cells 40 are accommodated in the case 51. For example, the plurality of battery cells 40, after being connected in parallel, in series, or in series-parallel connection, are disposed inside the case 51.

Optionally, the secondary battery 50 may further include other structures, which are not recited herein. For example, the battery 10 may further include a busbar component, and the busbar component is configured to achieve electrical connection among the plurality of battery cells 40, such as in parallel, in series, or in series-parallel connection. Specifically, the busbar component may achieve electrical connection among the battery cells 40 by connecting to electrode terminals of the battery cells 40. Further, the busbar component may be fixed to the electrode terminals of the battery cells 40 by welding. The electrical energy of the plurality of battery cells 40 can be further conducted through a conductive mechanism passing through the case 51. Optionally, the conductive mechanism may also belong to the busbar component.

Based on different power requirements, the number of the battery cells 40 may be set to any numerical value. The plurality of battery cells 40 may be connected in series, in parallel, or in series-parallel connection to achieve a higher capacity or power. Due to the possibly large number of the battery cells 40 included in each secondary battery 50, the battery cells 40 may also be arranged in groups for ease of mounting, with each group of the battery cells 40 forming a battery module. The number of the battery cells 40 included in the battery module is not limited and may be set as desired. The battery may include a plurality of battery modules. The plurality of battery modules may be connected in series, in parallel, or in series-parallel connection.

In addition, the present application further provides an electric device. The electric device includes at least one of the battery cell, the battery module, or the battery according to the present application. The battery cell, the battery module, or the battery may be used as a power source for the electric device, or may also be used as an energy storage unit for the electric device. The electric device may include, but is not limited to, a mobile device (e.g., a mobile phone or a laptop computer), an electric vehicle (e.g., a pure electric vehicle, a hybrid electric vehicle, a plug-in hybrid electric vehicle, an electric bicycle, an electric scooter, an electric golf cart, or an electric truck), an electric train, ship, or satellite, an energy storage system, or the like.

As for the electric device, a battery cell, a battery module, or a battery may be selected based on its usage requirements.

FIG. 7 shows an electric device as one example. The electric device is a pure electric vehicle, a hybrid electric vehicle, a plug-in hybrid electric vehicle, or the like. To meet the requirements of the electric device for high power and high energy density of the battery cell, the battery or the battery module may be used.

As another example, the device may be a mobile phone, a tablet computer, a laptop computer, or the like. The device is generally required to be light and thin, and a battery cell can thus be used as a power source.

[Examples]

Hereinafter, examples of the present application are described. The examples described below are exemplary and merely illustrative of the present application, and should not be construed as limiting the present application. The embodiments without techniques or conditions specified therein are implemented according to techniques or conditions described in the literature in the art or according to product instructions. Reagents or instruments used herein without specified manufacturers are all commercially available conventional products.

[Preparation of Secondary Battery]

[Example 1]

Preparation of positive electrode plate: The positive electrode active material lithium manganate ($LiMn_2O_4$), the conductive agent acetylene black, and the binder polyvinylidene difluoride (PVDF) were dissolved in the solvent N-methylpyrrolidone (NMP) in a mass ratio of 90%:5%:5%, and the mixture was uniformly stirred for mixing. An Al foil was then coated with the mixture, followed by drying and cold pressing to give the positive electrode plate.

Preparation of negative electrode plate: The negative electrode active material artificial graphite, the conductive

agent acetylene black, and the binder PVDF were dissolved in the solvent NMP in a mass ratio of 90%:5%:5%, and the mixture was uniformly stirred for mixing. A Cu foil was then coated with the mixture, followed by drying and cold pressing to give the negative electrode plate.

Preparation of separator: Aluminum oxide ($Al_2O_3$), the ion trapping agent $Li_7Ti_5O_{12}$, and the binder PVDF were dissolved in the solvent NMP in a mass ratio of 80%:15%:5%, and the mixture was uniformly stirred for mixing. A polyethylene (PE) base film was then coated with the mixture, followed by drying to give the separator.

Preparation of electrolytic solution: Ethylene carbonate (EC) and ethyl methyl carbonate (EMC) were mixed in a mass ratio of 30:70, and 1 M of lithium hexafluorophosphate ($LiPF_6$) electrolyte salt was dissolved in the mixture to give the electrolytic solution.

Assembly of lithium-ion battery: The positive electrode plate, the separator, and the negative electrode plate were stacked in sequence, with the separator placed between the positive and negative electrode plates for separation. The stack was then wound to give an electrode assembly, and the electrode assembly was placed in a battery housing. After drying, the electrolytic solution was injected, and then a lithium-ion battery 1 was obtained through processes such as formation and standing. This is Example 1.

[Examples 2-5]

Examples 2-5 were different from Example 1 in that the active material of the positive electrode plates was lithium cobaltate ($LiCoO_2$), lithium nickelate ($LiNiO_2$), lithium nickel cobalt manganate ($LiNi_{0.8}Co_{0.1}Mn_{0.1}O_2$), and lithium iron phosphate ($LiFePO_4$) in Examples 2-5, respectively.

[Examples 6-15]

Examples 6-15 were different from Example 1 in that the ion trapping agent in the separator was $Na_7Ti_5O_{12}$, Li powder, Al powder, $Li_{1/6}C$, $Li_{4.4}Si$, n-butyllithium, lithium naphthalenide,

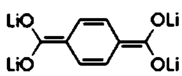 , 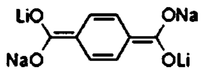 , and 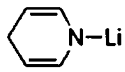

in Examples 6-15, respectively.

[Examples 16-21]

Examples 16-21 were different from Example 1 in that during the preparation of the separator, the mass ratio of $Al_2O_3$ to the ion trapping agent $Li_7Ti_5O_{12}$ to the binder PVDF was 80%:8%:12%, 80%:10%:10%, 75%:20%:5%, 40%:50%:10%, 85%:5%:10%, and 35%:55%:10% in Examples 16-21, respectively.

[Comparative Example 1]

Comparative Example 1 was different from Example 1 in that no ion trapping agent was added into the separator in Comparative Example 1.

[Comparative Example 2]

Comparative Example 2 was different from Example 2 in that no ion trapping agent was added into the separator in Comparative Example 2.

[Comparative Example 3]

Comparative Example 3 was different from Example 3 in that no ion trapping agent was added into the separator in Comparative Example 3.

[Comparative Example 4]

Comparative Example 4 was different from Example 4 in that no ion trapping agent was added into the separator in Comparative Example 4.

[Comparative Example 5]

Comparative Example 5 was different from Example 5 in that no ion trapping agent was added into the separator in Comparative Example 5.

[Battery Performance Test]

1. Capacity retention rate test of battery

At 45 °C, the lithium-ion secondary battery was charged at a constant current of 1 C until the upper voltage limit was reached, followed by constant voltage charging at the upper voltage limit until the current dropped to 0.05 C, and then the lithium-ion secondary battery was discharged at a constant current of 1 C until the lower voltage limit was reached. This is one charging and discharging cycle. The charging and discharging were repeated in this manner, and the capacity retention rate of the lithium-ion secondary battery after 500 cycles was calculated.

Capacity retention rate of the lithium-ion secondary battery after 500 cycles at 45 °C (%) = (discharge capacity in the 500th cycle/discharge capacity in the first cycle) $\times$ 100%.

2. Content assay for transition metals in negative electrode after 500 cycles at 45 °C

The lithium-ion secondary battery after 500 cycles at 45 °C was dissembled, the negative electrode plate was taken out, and then the total content of transition metals (such as Ni, Co, Mn, or Fe) in the negative electrode plate was tested by using inductively coupled plasma atomic emission spectrometry, with reference to EPA 6010D-2014.

The voltage range of the battery performance test was selected, and different voltage parameters were set according to different battery systems. The upper limit and the lower limit of the voltage of the lithium manganate system were selected to be 3-4.3 V; the upper limit and the lower limit of the voltage of the lithium cobaltate system were selected to be 2.6-4.2 V; the upper limit and the lower limit of the voltage of the lithium nickelate system were selected to be 2.5-4.2 V; the upper limit and the lower limit of the voltage of the lithium nickel cobalt manganate system were selected to be 2.8-4.25 V; and the upper limit and the lower limit of the voltage of the lithium iron phosphate system were selected to be 2-3.65 V.

The product parameters of different examples and comparative examples, as well as the test results of the battery performance for Comparative Examples 1-5 and Examples 1-21 using the above method, are shown in Tables 1-5.

Table 1: Product parameters and performance test results of Comparative Example 1 and Examples 1 and 6-21

| No. | Positive electrode active material | Mass percentage of ion trapping agent in porous coating/% | Ion trapping agent | Capacity retention rate of battery after 500 cycles at 45 °C/% | Content of transition metals in negative electrode after 500 cycles at 45 °C/ppm |
|---|---|---|---|---|---|
| Example 1 | Lithium manganate | 15 | $Li_7Ti_5O_{12}$ | 91.6 | 927 |
| Example 6 | Lithium manganate | 15 | $Na_7Ti_5O_{12}$ | 88.9 | 1152 |
| Example 7 | Lithium manganate | 15 | Li powder | 93.5 | 275 |
| Example 8 | Lithium manganate | 15 | Al powder | 86.6 | 1763 |
| Example 9 | Lithium manganate | 15 | $Li_{1/6}C$ | 92.7 | 832 |
| Example 10 | Lithium manganate | 15 | $Li_{4.4}Si$ | 92.7 | 859 |
| Example 11 | Lithium manganate | 15 | n-Butyllithium | 92.5 | 539 |
| Example 12 | Lithium manganate | 15 | Lithium naphthalenide | 92.1 | 781 |

(continued)

| No. | Positive electrode active material | Mass percentage of ion trapping agent in porous coating/% | Ion trapping agent | Capacity retention rate of battery after 500 cycles at 45 °C/% | Content of transition metals in negative electrode after 500 cycles at 45 °C/ppm |
|---|---|---|---|---|---|
| Example 13 | Lithium manganate | 15 | 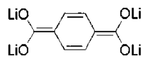 | 91.1 | 1065 |
| Example 14 | Lithium manganate | 15 | 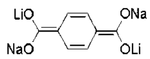 | 91.7 | 982 |
| Example 15 | Lithium manganate | 15 | 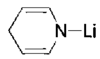 | 92.4 | 615 |
| Example 16 | Lithium manganate | 8 | $Li_7Ti_5O_{12}$ | 88.2 | 1532 |
| Example 17 | Lithium manganate | 10 | $Li_7Ti_5O_{12}$ | 90.3 | 1259 |
| Example 18 | Lithium manganate | 20 | $Li_7Ti_5O_{12}$ | 91.4 | 877 |
| Example 19 | Lithium manganate | 50 | $Li_7Ti_5O_{12}$ | 89.5 | 1266 |
| Example 20 | Lithium manganate | 5 | $Li_7Ti_5O_{12}$ | 85.3 | 2042 |
| Example 21 | Lithium manganate | 55 | $Li_7Ti_5O_{12}$ | 90.0 | 941 |
| Comparative Example 1 | Lithium manganate | / | / | 85.1 | 2325 |

As can be seen from the comparison between the results of Comparative Example 1 and Examples 1 and 6-21, when the ion trapping agents $Li_7Ti_5O_{12}$, $Na_7Ti_5O_{12}$, metallic Li (powder), metallic Al (powder), $Li_{1/6}C$, $Li_{4.4}Si$, n-butyllithium, lithium naphthalenide,

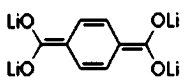 , 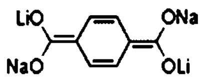 , and 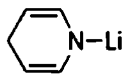

provided in the examples of the present application were added into lithium manganate batteries separately, the cycle performance of the lithium manganate batteries was significantly improved, and the contents of transition metals on the negative electrode plate were also significantly reduced.

As can be seen from the comparison between the results in Examples 1 and 16-21, within a certain range, a greater mass percentage of the ion trapping agent in the porous coating indicates a greater improvement in the cycle performance of the lithium manganate battery; beyond the range, the increase in the mass percentage of the ion trapping agent in the porous coating will no longer significantly improve the cycle performance of the lithium manganate battery. In the examples of the present application, keeping the other conditions identical, when the mass percentage of the ion trapping agent in the porous coating is 8% to 50%, the lithium manganate battery may possess good cycle performance.

Table 2: Product parameters and performance test results of Comparative Example 2 and Example 2

| No. | Positive electrode active material | Mass percentage of ion trapping agent in porous coating/% | Ion trapping agent | Capacity retention rate of battery after 500 cycles at 45 °C/% | Content of transition metals in negative electrode after 500 cycles at 45 °C/ppm |
|---|---|---|---|---|---|
| Example 2 | Lithium cobaltate | 15 | $Li_7Ti_5O_{12}$ | 89.9 | 604 |
| Comparative Example 2 | Lithium cobaltate | / | / | 83.2 | 1798 |

As can be seen from the comparison between the results in Comparative Example 2 and Example 2, the lithium cobaltate battery including the ion trapping agent $Li_7Ti_5O_{12}$ may have improved cycle performance and significantly reduced content of transition metals in the negative electrode plate.

Table 3: Product parameters and performance test results of Comparative Example 3 and Example 3

| No. | Positive electrode active material | Mass percentage of ion trapping agent in porous coating/% | Ion trapping agent | Capacity retention rate of battery after 500 cycles at 45 °C/% | Content of transition metals in negative electrode after 500 cycles at 45 °C/ppm |
|---|---|---|---|---|---|
| Example 3 | Lithium nickelate | 15 | $Li_7Ti_5O_{12}$ | 91.8 | 536 |
| Comparative Example 3 | Lithium nickelate | / | / | 87.6 | 1536 |

As can be seen from the comparison between the results in Comparative Example 3 and Example 3, the lithium nickelate battery including the ion trapping agent $Li_7Ti_5O_{12}$ may have improved cycle performance and significantly reduced content of transition metals in the negative electrode plate.

Table 4: Product parameters and performance test results of Comparative Example 4 and Example 4

| No. | Positive electrode active material | Mass percentage of ion trapping agent in porous coating/% | Ion trapping agent | Capacity retention rate of battery after 500 cycles at 45 °C/% | Content of transition metals in negative electrode after 500 cycles at 45 °C/ppm |
|---|---|---|---|---|---|
| Example 4 | Lithium nickel cobalt manganate | 15 | $Li_7Ti_5O_{12}$ | 92.1 | 439 |
| Comparative Example 4 | Lithium nickel cobalt manganate | / | / | 87.2 | 1623 |

As can be seen from the comparison between the results in Comparative Example 4 and Example 4, the lithium nickel cobalt manganate battery including the ion trapping agent $Li_7Ti_5O_{12}$ may have improved cycle performance and significantly reduced content of transition metals in the negative electrode plate.

Table 5: Product parameters and performance test results of Comparative Example 5 and Example 5

| No. | Positive electrode active material | Mass percentage of ion trapping agent in porous coating/% | Ion trapping agent | Capacity retention rate of battery after 500 cycles at 45 °C/% | Content of transition metals in negative electrode after 500 cycles at 45 °C/ppm |
|---|---|---|---|---|---|
| Example 5 | Lithium iron phosphate | 15 | $Li_7Ti_5O_{12}$ | 95.1 | 325 |

(continued)

| No. | Positive electrode active material | Mass percentage of ion trapping agent in porous coating/% | Ion trapping agent | Capacity retention rate of battery after 500 cycles at 45 °C/% | Content of transition metals in negative electrode after 500 cycles at 45 °C/ppm |
|---|---|---|---|---|---|
| Comparative Example 5 | Lithium iron phosphate | / | / | 93.2 | 983 |

As can be seen from the comparison between the results in Comparative Example 5 and Example 5, the lithium iron phosphate battery including the ion trapping agent $Li_7Ti_5O_{12}$ may have improved cycle performance and significantly reduced content of transition metals in the negative electrode plate.

Although the present application has been described with reference to preferred embodiments, various modifications can be made and components can be replaced with equivalents without departing from the scope of the present application. In particular, the technical features mentioned in the examples can be combined in any manner, provided that there is no structural conflict. The present application is not limited to the specific embodiments disclosed herein but includes all the technical solutions that fall within the scope of the claims.

## Claims

1. A secondary battery, comprising a positive electrode plate, a separator, and a negative electrode plate, wherein at least one of the positive electrode plate, the separator, or the negative electrode plate comprises an ion trapping agent, and the reduction potential of the ion trapping agent relative to lithium metal is 0-2 V.

2. The separator according to claim 1, wherein the ion trapping agent comprises at least one of an active metal and an alkali metal compound;

   optionally, the active metal comprises at least one of Li, Na, K, Rb, Cs, Fr, Mg, Ca, Sr, Ba, Al, Ti, or V, and optionally, the active metal comprises at least one of Li, Na, Mg, Al, Ti, or V;
   optionally, the alkali metal compound comprises at least one of $A^1{}_xB$, $A^2{}_yTi_5O_{12}$, and a compound represented by formula (I), formula (II), or formula (III):

   $R-A^3$ (I), 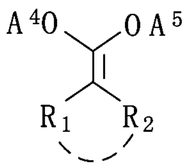 (II), 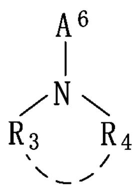 (III)

   wherein $A^1$, $A^2$, $A^3$, $A^4$, $A^5$, and $A^6$ each independently comprise at least one of Li, Na, or K, B comprises C, Si, or Sn, $x \geq 0.05$, $y > 4$, and R, $R_1$, $R_2$, $R_3$, and $R_4$ each independently comprise at least one of a hydrogen atom, an alkyl having 1-20 carbon atoms, an alkyl having 1-20 carbon atoms and substituted with a sulfonic acid group or a sulfonyl, an alkenyl having 2-20 carbon atoms, an alkenyl having 2-20 carbon atoms and substituted with a sulfonic acid group or a sulfonyl, an aryl having 6-26 carbon atoms, an aryl having 6-26 carbon atoms and substituted with a sulfonic acid group or a sulfonyl, a carboxyl having 1-20 carbon atoms, a carboxyl having 1-20 carbon atoms and substituted with a sulfonic acid group or a sulfonyl, a carbonyl group having 1-20 carbon atoms, a carbonyl having 1-20 carbon atoms and substituted with a sulfonic acid group or a sulfonyl, an aryloxy having 6-26 carbon atoms, and an aryloxy having 6-26 carbon atoms and substituted with a sulfonic acid group or a sulfonyl.

3. The secondary battery according to claim 2 wherein the $A^1{}_xB$ comprises at least one of $Li_{1/6}C$, $Na_{1/6}C$, $K_{1/8}C$, $Li_{4.4}Si$, or $Li_{4.4}Sn$.

4. The secondary battery according to claim 2 or 3, wherein $5 \leq y \leq 7$; optionally, the $A^2{}_yTi_5O_{12}$ comprises at least one of $Li_7Ti_5O_{12}$ or $Na_7Ti_5O_{12}$.

**5.** The secondary battery according to any one of claims 2 to 4, wherein the compound represented by formula (I) comprises at least one of n-butyllithium, lithium naphthalenide, or lithium biphenyl.

**6.** The secondary battery according to any one of claims 2 to 5, wherein the compound represented by formula (II) comprises at least one of

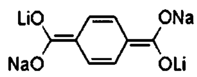, 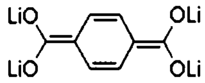,

or

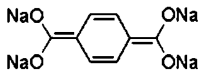.

**7.** The secondary battery according to any one of claims 2 to 6, wherein the compound represented by formula (III) comprises at least one of

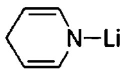, 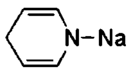, or 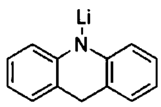.

**8.** The secondary battery according to any one of claims 1 to 7, wherein the positive electrode plate comprises a positive electrode current collector and a positive electrode film layer arranged on the positive electrode current collector, and the positive electrode film layer comprises the ion trapping agent.

**9.** The secondary battery according to claim 8, wherein the ion trapping agent is present in the positive electrode film layer in a mass percentage of 0.1% to 10%, and optionally, the ion trapping agent is present in the positive electrode film layer in a mass percentage of 1% to 5%.

**10.** The secondary battery according to any one of claims 1 to 9, wherein the negative electrode plate comprises a negative electrode current collector and a negative electrode film layer arranged on the negative electrode current collector, and the negative electrode film layer comprises the ion trapping agent.

**11.** The secondary battery according to claim 10, wherein the ion trapping agent is present in the negative electrode film layer in a mass percentage of 0.1% to 10%, and optionally, the ion trapping agent is present in the negative electrode film layer in a mass percentage of 1% to 5%.

**12.** The secondary battery according to any one of claims 1 to 11, wherein the separator comprises a porous base film, and the porous base film comprises the ion trapping agent.

**13.** The secondary battery according to claim 12, wherein the ion trapping agent is present in the porous base film in a mass percentage of 1% to 20%, and optionally, the ion trapping agent is present in the porous base film in a mass percentage of 5% to 10%.

**14.** The secondary battery according to any one of claims 1 to 13, wherein the separator comprises the porous base film and a porous coating arranged on the porous base film, and the porous coating comprises the ion trapping agent.

**15.** The secondary battery according to claim 14, wherein the ion trapping agent is present in the porous coating in a mass percentage of 8% to 50%, and optionally, the ion trapping agent is present in the porous coating in a mass percentage of 10% to 20%.

**16.** An electric device, comprising the secondary battery according to any one of claims 1 to 15.

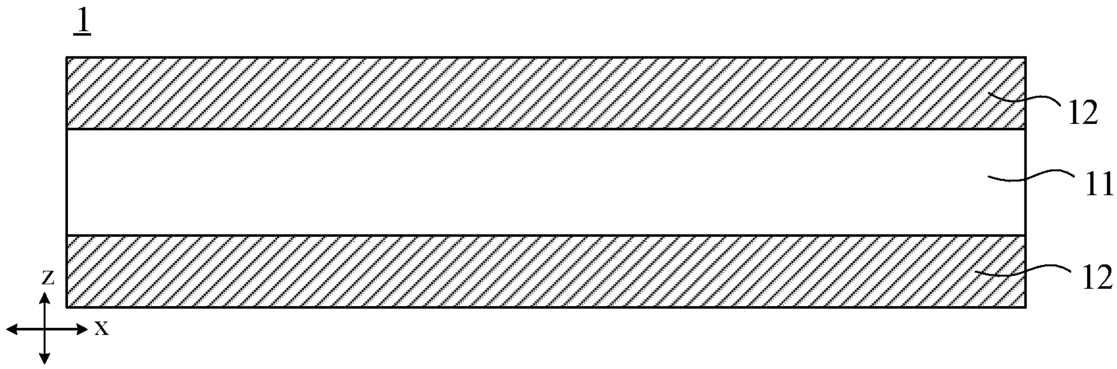


FIG. 1

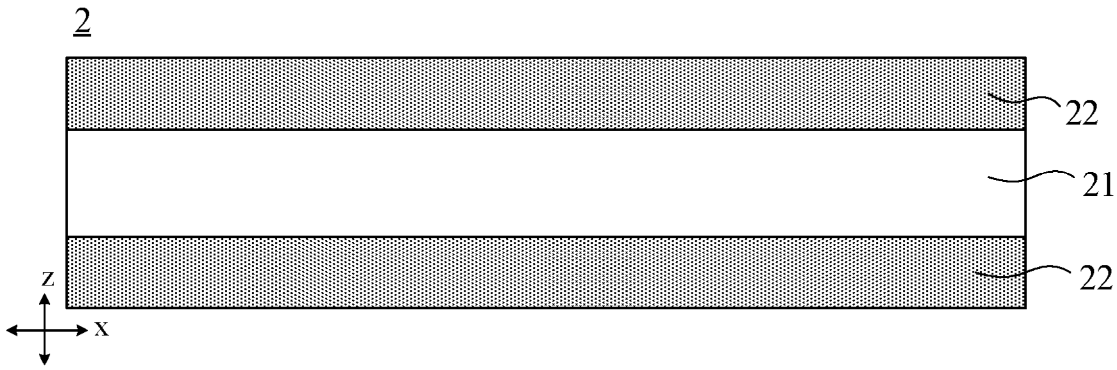


FIG. 2

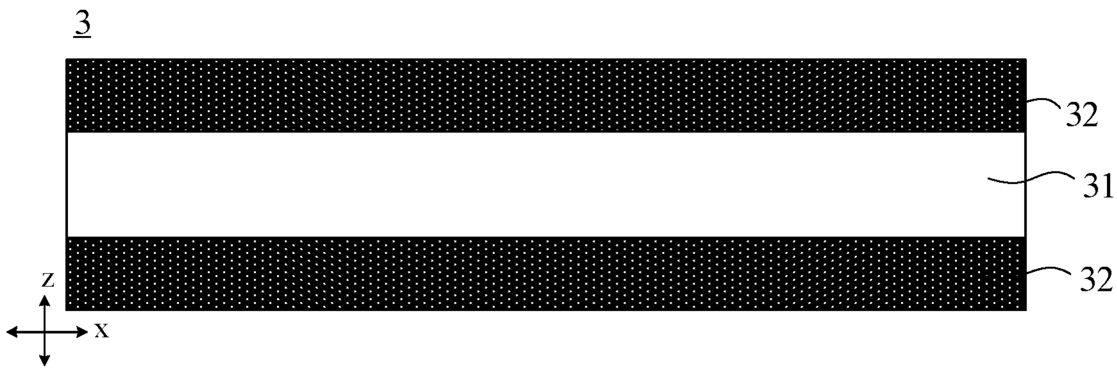


FIG. 3

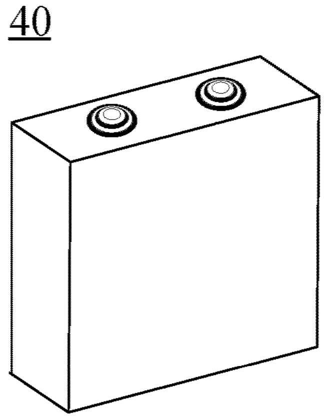


FIG. 4

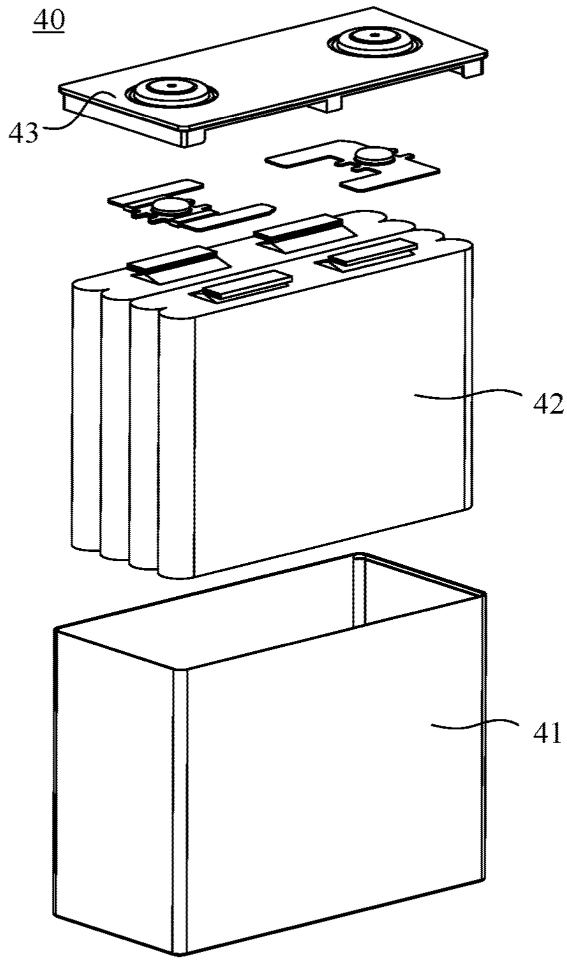


FIG. 5

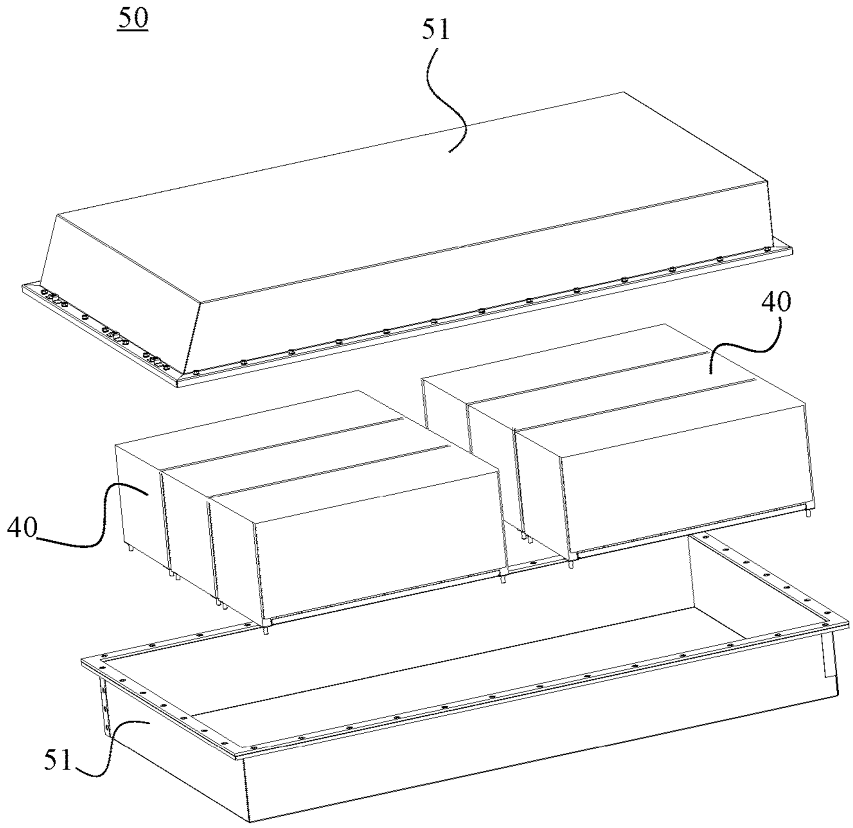


FIG. 6

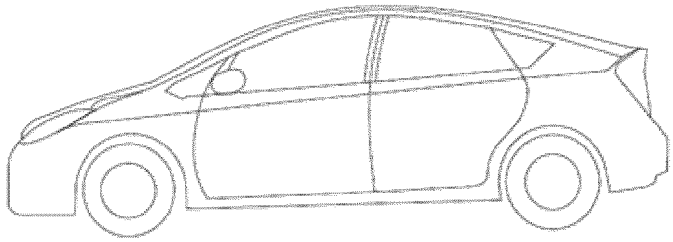

FIG. 7

**INTERNATIONAL SEARCH REPORT**

International application No. **PCT/CN2023/097546**

**A. CLASSIFICATION OF SUBJECT MATTER**

H01M 10/0525(2010.01)i

According to International Patent Classification (IPC) or to both national classification and IPC

**B. FIELDS SEARCHED**

Minimum documentation searched (classification system followed by classification symbols)

IPC: H01M

Documentation searched other than minimum documentation to the extent that such documents are included in the fields searched

Electronic data base consulted during the international search (name of data base and, where practicable, search terms used)

VEN, CNABS, CNTXT, ENTXT, ENTXTC, DWPI, CNKI: 电池, 离子, 捕获, 捕捉, 还原, 吸附, battery, capture, ion?, reduc+, metal, adsorb+

**C. DOCUMENTS CONSIDERED TO BE RELEVANT**

| Category* | Citation of document, with indication, where appropriate, of the relevant passages | Relevant to claim No. |
|---|---|---|
| X | JP 2012028150 A (TOYOTA MOTOR CORP.) 09 February 2012 (2012-02-09)<br>description, paragraphs 5-40 | 1-16 |
| X | CN 116034497 A (CONTEMPORARY AMPEREX TECHNOLOGY CO., LTD.) 28 April 2023 (2023-04-28)<br>description, paragraphs 3-29 | 1-2, 10, 16 |
| A | CN 115882160 A (CONTEMPORARY AMPEREX TECHNOLOGY CO., LTD.) 31 March 2023 (2023-03-31)<br>entire document | 1-16 |
| A | CN 111886724 A (LG CHEMICAL LTD.) 03 November 2020 (2020-11-03)<br>entire document | 1-16 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **11 October 2023** | **25 December 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | <br>Telephone No. |

Form PCT/ISA/210 (second sheet) (July 2022)

**INTERNATIONAL SEARCH REPORT**
**Information on patent family members**

International application No.
**PCT/CN2023/097546**

| Patent document cited in search report | | | Publication date (day/month/year) | Patent family member(s) | | | Publication date (day/month/year) |
|---|---|---|---|---|---|---|---|
| JP | 2012028150 | A | 09 February 2012 | None | | | |
| CN | 116034497 | A | 28 April 2023 | WO | 2023023984 | A1 | 02 March 2023 |
| | | | | KR | 20230031297 | A | 07 March 2023 |
| | | | | IN | 202317016731 | A | 17 March 2023 |
| | | | | EP | 4163998 | A1 | 12 April 2023 |
| CN | 115882160 | A | 31 March 2023 | WO | 2023050842 | A1 | 06 April 2023 |
| | | | | KR | 20230088782 | A | 20 June 2023 |
| CN | 111886724 | A | 03 November 2020 | WO | 2020040446 | A1 | 27 February 2020 |
| | | | | KR | 20200022975 | A | 04 March 2020 |
| | | | | US | 2021050587 | A1 | 18 February 2021 |

Form PCT/ISA/210 (patent family annex) (July 2022)